# EUROPEAN PATENT APPLICATION

(11) **EP 2 669 556 A1**
(43) Date of publication of application: **04.12.2013**
(21) Application number: 13169763.3
(22) Date of filing: 29.05.2013
(51) Int. Cl.: F16J 15/32

(54) **A leaf seal**

(30) Priority: 31.05.2012 GB 201209705
(71) Applicant: Rolls-Royce plc, London SW1E 6AT (GB)
(72) Inventor: Nasti, Adele, Derby, DE1 3DE (GB); Franceschini, Gervas, Derby, Derbyshire DE23 1XP (GB); Jahn,Ingo Henry Johannes, Queensland (AU); Owen, Andrew Kevin, Oxford OX2 8JN (GB)
(74) Representative: Hartley, Andrew Colin

(57) **Abstract**

Described is a leaf seal for sealing between a static component and a relatively rotating component having an axis of rotation, the leaf seal defining axially separated higher pressure upstream and lower pressure downstream areas within the static component when in use, the leaf seal comprising: a plurality of leaf elements having: a root end for attachment to the static component; a free end for wiping contact with the rotating component; an upstream edge extending from the root end to the free end; and, a downstream edge extending from the root end to the free end, wherein the leaf element width between the upstream edge and downstream edge at the root end is *a*, and width between the upstream edge and the downstream edge at the free end is b, where *b*<0.5*a*.

## Description

### Technical Field of Invention

This invention relates to a leaf seal. In particular, this invention relates to a leaf seal for use in a gas turbine engine.

### Background of Invention

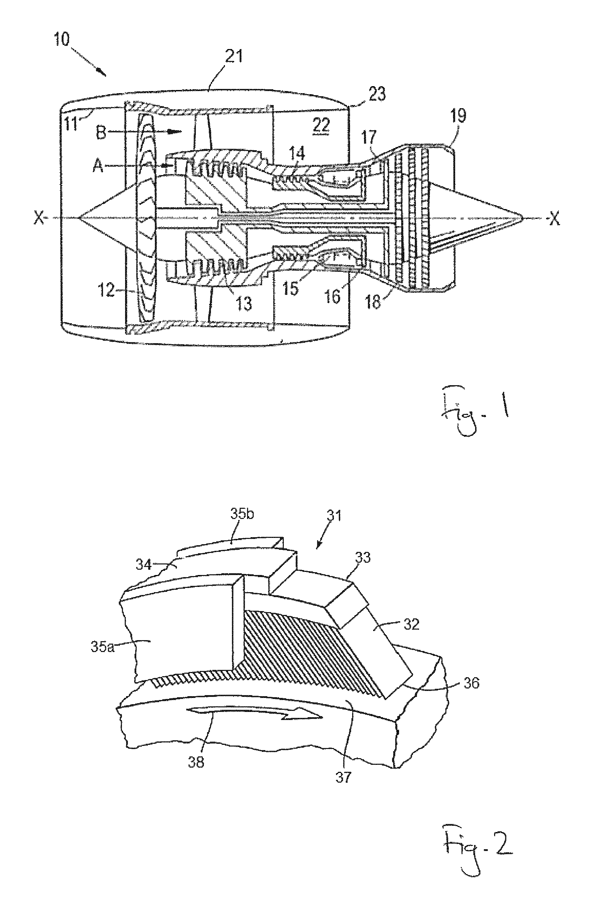

With reference to Figure 1, a ducted fan gas turbine engine which may incorporate the invention is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The engine may have one or more seals installed, for example, between an interconnecting shaft and a casing for the shaft. Such seals may be so-called leaf seals.

Generally, leaf seals are used to form a seal between two relatively rotating components in order to provide a pressure barrier which defines high and low pressure areas. The pressure barrier is provided with a large number of typically rectangular leaves which are held at a defined angle to the radial all the way round the seal circumference. The leaves are flexible and allow radial compliance which can accommodate changes in the radial position of the two relatively rotating components. The leaves are packed at a sufficient density to provide an effective pressure barrier but the use of leaves inevitably leads to interleaf gaps and porosity across the seal.

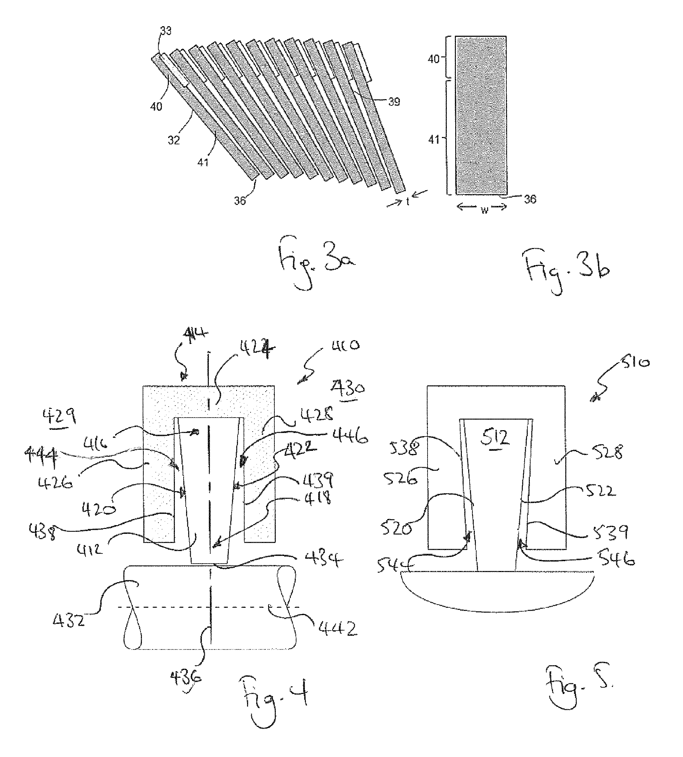

Figure 2 shows schematically a cut-away perspective view of a portion of a typical leaf seal 31 comprising a pack of leaves 32. Figure 3a shows an end view of a segment of a leaf seal viewed along the axis of rotation of a rotating shaft. Figure 3b shows a face view of a single leaf 32.

Each leaf 32 is in the form of a plate, each having a root end 40, a free end 41, axial width, w, and a thickness, t. The leaves alternate with spacer elements 33 at the root end 40 and are secured to a backing ring 34 of a housing, which typically also comprises front 35a (high pressure side) and rear (low pressure side) 35b rigid annular cover plates. The free ends 41 of the leaves 32 present end edges 36 towards a surface 37 of a rotating component (shaft) generally rotating in the direction depicted by arrowhead 38. The leaves 32, and in particular the free end edges 36 of the leaves 32, act against the surface 37 in order to create a seal across the assembly 31. Each leaf 32 is sufficiently compliant in order to radially adjust with rotation of the surface 37, so that a good sealing effect is created. The spacers 33 ensure that flexibility is available to appropriately present the leaves 32 towards the surface 37 which, as illustrated, is generally with an inclined angle between them. The spacers 33 also help to form interleaf gaps 39 between adjacent working portions 41 of the leaves 32. An axial leakage flow through these gaps 39 is induced by the pressure differential across the seal.

The leakage flow can contribute to leaf blow-down where the free end edges 36 are urged radially inwards so as to bear on the rotor surface 37. Although a limited amount of blow-down is desirable to create a good seal between the free end edges 36 and the surface 37, excessive blow-down causes excessive rotor loading and wear in the seal and rotor. The wear of the end edges and/or the rotor can limit the usable life of the seal.

Various configurations of leaf seal have been proposed to help control the amount of blow-down. One example of this is described in WO06016098 which implements a leaf with an edge chamfer and an associated feature on the opposing cover plate, the separation of the two defines a control gap which is dependent on the radial deflection of a leaf.

Another potential issue with leaf seals is that the creation of non-uniform circumferential pressure distribution which are a result of using solid continuous leaves. To help alleviate this, it can be advantageous to introduce pressure equalising features to help reduce the differential in forces across the solid leaf elements.

One method of providing pressure equalisation is to include one or more apertures in the leaf working section to provide a flow between two sides of the leaf. Although this can be effective for equalising the pressure in the locality of the aperture(s) and reducing the loading on the leaf, the apertures lead to increases in leaf stress. This largely negates any benefit achieved with the pressure equalisation.

If circumferential pressure equalization is to be achieved successfully then the apertures need to avoid the use of a stress raising feature and be small in comparison to the axial length of the leaf element. However, a standard rectangular section leaf is highly loaded at the root end by the pressure loads in use, so the inclusion of holes in this shape cross-section is generally problematic.

It is an object of the present invention to provide an improved leaf seal.

### Statements of Invention

The present invention provides a leaf seal for sealing between a static component and a relatively rotating component having an axis of rotation, the leaf seal defining axially separated higher pressure upstream and lower pressure downstream areas when in use, the leaf seal comprising: a plurality of leaf elements having: a root end for attachment to the static component; a free end for wiping contact with the rotating component; an upstream edge extending from the root end to the free end; and, a downstream edge extending from the root end to the free end, wherein the leaf element width between the upstream edge and downstream edge at the root end is *a*, and width between the upstream edge and the downstream edge at the free end is *b*, where *b*<0.5*a*.

The taper of the leaf elements advantageously removes material from the free end of the leaf elements which is not necessary for carrying the axial pressure drop. Further, it allows the root end of the leaf elements to be wider for a given weight meaning that the leaf can include pressure equalisation features or be made more resilient against radial deflection.

Preferably, *b* is in the range 0.1*a*<*b*<0.5*a*.

The taper angle of either or both of the upstream edge and downstream edge of at least one leaf element relative to the normal of the rotational axis may be between 2 and 45 degrees. Preferably, the taper angle of the upstream edge relative to the normal of the rotational axis is between 5 and 20 degrees. Preferably, the taper angle of the downstream edge relative to the normal of the rotational axis is between 5 and 20 degrees.

The leaf seal may further comprise an upstream and a downstream cover plate. Each cover plate may have an inner wall which faces the leaf element in use. The angle of either or both of the upstream inner wall and downstream inner wall relative to the normal of the rotational axis may be between 2 and 45 degrees. Preferably, the angle of the upstream inner wall relative to the normal of the rotational axis is between 5 and 20 degrees. Preferably, the downstream inner wall relative to the normal of the rotational axis is between 5 and 20 degrees.

The difference in the angle of one or other of the upstream and downstream inner walls and the corresponding edge of the leaf element may be less than 10 degrees relative to the normal of the rotational axis. Preferably, the difference in the angle of one or other of the upstream and downstream inner walls and the corresponding edge of the leaf seal is less than 5 degrees relative to the normal of the rotational axis. The angle of inner wall of either or both of the upstream or downstream cover plate and the corresponding edge of the leaf seal may be substantially the same when the leaf seal is in a non-working cold state, or at a nominal or specific operating point as per a given application.

Either or both of the leaf element upstream and downstream edges may include either or both of a convex portion and a concave portion.

Either or both of the upstream or downstream cover plate inner walls may include either or both of a convex portion and a concave portion.

At least one of the upstream or downstream leaf element edges may be separated from a corresponding portion of the adjacent inner wall by a gap. The gap may be substantially constant along the radial length of the inner wall.

The gap may be axially larger at the root end compared to the separation at the free end. Alternatively, the gap may be axially smaller at the root end compared to the separation at the free end.

At least one leaf element may be asymmetric about a radially extending mid-line. The arrangement of the upstream and downstream cover plate inner walls may be asymmetric about the radially extending mid-line.

The cover plates may have axial thickness and either or both of the upstream and downstream cover plates may be tapered so as to have a thicker cross section at the root end.

At least one leaf element may include an aperture for pressure equalisation across the circumferential thickness of the leaf element. The aperture may be local to the root end. The aperture may pass from one circumferential face of the leaf element through the leaf element circumferential thickness to the other circumferential face. The aperture may extend from a backing plate onto which the leaf element is bonded. The aperture may be triangular so as to provide a substantially V or Y shaped leaf element in which the root end is bifurcated by the aperture.

The leaf element may include at least one labyrinth tooth. The labyrinth tooth may be in an aperture. The aperture may be the pressure equalisation aperture. The labyrinth tooth may be symmetrical in the radial cross section. The labyrinth tooth may be centrally located within the aperture. Alternatively, the labyrinth tooth may be axially offset within the aperture so as to provide an open passage on the upstream or downstream side of the labyrinth tooth. The labyrinth tooth may be a rib or flange which extends from the backing plate on to which the leaf element is mounted. There may be a plurality of labyrinth teeth within a common aperture. The plurality of labyrinth teeth may be axially separated and parted by a radial line. The radial line may be a radial mid line of the leaf element. The plurality of labyrinth teeth may be symmetrically arranged about the radial line. The plurality of labyrinth teeth may be axially offset in relation to the aperture or be asymmetrically arranged.

The leaf seal may further comprise a cavity in fluid connection with a pressure source which is external to the seal. The external pressure source may be taken from an upstream area relative to the seal. The external pressure source may be metered to provide an intermediate pressure in the cavity. By intermediate pressure it is meant that it will be in the range bounded by the areas immediately upstream and downstream of the seal. The cavity may be proximate to the aperture or labyrinth tooth. Where there are a plurality of labyrinth teeth, the cavity may be partially defined by one or more of the plurality of labyrinth teeth.

Any edge of the leaf seal any rounded in a cross section defined by a circumferential plane. The leaf seal may have bull nosed, race track or elliptical shape in the cross section. The leaf element may have constant axial thickness. The radial thickness may vary. The root end may be thicker in the plane defined by the normal of the radial axis.

In another aspect, the present invention provides a leaf seal for sealing between a static component and a relatively rotating component having an axis of rotation, the leaf seal defining axially separated higher pressure upstream and lower pressure downstream areas within the static component when in use, the leaf seal comprising: a plurality of leaf elements having: a root end for attachment to the static component; a free end for wiping contact with the rotating component; an upstream edge extending from the root end to the free end; and, a downstream edge extending from the root end to the free end, wherein the leaf element is tapered towards the free end, the taper angle of the upstream edge and downstream edge to the normal of the rotational axis are between 2 and 45 degrees in a non-working state.

The minimum taper angle may be 5 degrees. The taper angles of the upstream and downstream edges may be between 5 and 45 degrees. The taper angles may be between 2 and 20 degrees.

The seal may be used in a gas turbine engine.

### Description of Drawings

Embodiments of the invention will now be described with the aid of the following drawings of which:
Figure 1 shows a conventional gas turbine engine.
Figure 2 shows a cutaway perspective view of a segment of a known leaf seal.
Figure 3a shows an end view of a segment of a leaf seal viewed along the axis of rotation of the rotating shaft which is sealed around.
Figure 3b shows a face view of a single leaf.
Figure 4 a cross section of leaf seal according to the present invention.
Figure 5 shows a leaf seal having cover plates with angled inner walls.
Figure 6 shows a dimensioned schematic representation of a leaf seal of the invention.
Figure 7 shows a dimensioned schematic representation of a leaf seal in first and second radial positions.
Figure 8 shows a schematic representation of a leaf element having a quadratic width profile.
Figure 9 shows a schematic representation of a leaf element having convex edge profiles.
Figure 10 shows a schematic representation of a leaf element having edge profiles which are generally concave.
Figure 11 shows a schematic representation of a symmetrical leaf element having edge profiles with convex and concave portions.
Figure 12 shows a schematic representation of an asymmetrical leaf element having edge profiles with convex and concave portions.
Figure 13 shows a skewed asymmetric tapered leaf element.
Figure 14 shows another skewed asymmetric tapered leaf element.
Figures 15 and 16 show alternative leaf element and cover plate configurations in which the separating gap is tapered in a radially outwards and a radially inwards direction respectively.
Figure 17 shows a concave seal element with corresponding cover plate.
Figure 18 shows a radially convex-concave leaf element with radially convex-concave cover plates but varying separating gap.
Figure 19 shows asymmetric cover plate profiles which provide varying separating gaps.
Figure 20 shows a leaf seal with tapering cover plates.
Figure 21 shows a leaf seal having a pressure equalisation feature in the form of an aperture.
Figure 22 shows a leaf seal having an axial flow restricting feature.
Figure 23 shows a leaf seal having a concave leaf element and convex cover plate inner walls which correspond to provide flared separating gaps therebetween.
Figure 24 shows a two part axial flow restrictor.
Figure 25 shows a two part axial flow restrictor with air injection.
Figure 26 shows a plurality of cross sections taken from different leaf elements to demonstrate varying levels of rounded edges.

### Detailed Description of Invention

Figure 4 shows a cross section of leaf seal 410 according to the present invention. The seal is similar in many ways to the seal described in Figures 2 and 3a,b and includes a plurality of leaf elements 412 held in a circular array within a housing 414 which is suitable for attaching to a static component (not shown). Each leaf element 412 (of which only one is shown) includes a root end 416, a free end 418, an upstream edge 420 and a downstream edge 422. The root end 416 is attached to the backing plate 424 of the housing 414. The upstream 420 and downstream 422 edges are flanked by corresponding rigid annular cover plates 426, 428.

In use, the plurality of leaf elements 412 are arranged at a defined angle to the radial around the seal circumference and provide a barrier to airflow from an upstream side 429 of the seal to a downstream side 430. The free end 418 of the complaint leaf element 412 is provided in wiping contact with the rotatable shaft 432 so as to provide a sealing surface 434 therebetween. The spacing between individual leaf elements 412 is greater towards the root end 416 which leads to some porosity and leakage across the seal 410.

The radial length of the leaf elements 412 tapers from the root end 416 to the free end 418 so as to provide a trapezoidal shape, with the root end 416 having a greater axial width. The taper is symmetrical about a radially extending midline 436 and extends from the free end 418 to the junction with the backing plate 424 at the root end 416 such that the full lengths of the upstream 420 and downstream 422 edges are angled with respect to the radial midline 436. The upstream 420 and downstream 422 edges are straight so as to provide a uniform taper. The circumferential thickness of each leaf element 412 is uniform.

The cover plates 426, 428 of the embodiment shown in Figure 4 extend axially so as to have a thickness with inner walls 438, 439 which face the leaf elements 412 and outer walls which face the respective upstream 429 and downstream 430 pressure areas. The inner walls 438, 439 of the cover plates 426, 428 shown in Figure 4 are orthogonally set with respect to the rotational axis 442 so as to lie in the normal plane thereof. As such, the gaps 444, 446 which separates the inner wall 438 from the respective leaf element edge 420, 422 is tapered due to the tapered shape of the leaf element 412.

Figure 5 shows a leaf seal 510 with alternative cover plates 526, 528 in which the inner walls 538, 539 are angled with respect to the radial and correspond to the taper of the leaf seal 510. In this instance, the separating gaps 544, 546 between the respective inner walls 538, 539 and tapered leaf elements edges 520, 522 are substantially constant along the length of the leaf element 512. It will be appreciated that the separating gap will be dependent on the operating condition of the seal 510 and may vary during use. Hence, the term 'substantially constant' should be taken as an approximation and when the seal is in either a non-working cold state or at a nominal or specific operating point, as required for a particular application.

As will be seen from the embodiments described below, the relationship between the angle and spacing of the cover plate inner walls to the corresponding upstream and downstream edges of the leaf seals can be altered to provide a required performance from the seal in question.

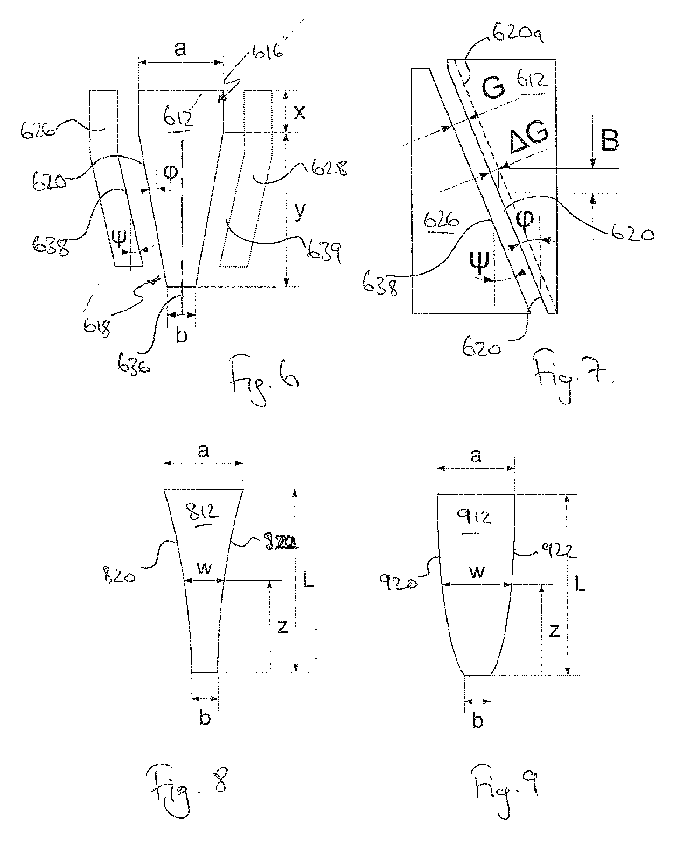

The taper of the leaf elements of the invention and configuration of the cover plates can be characterised using the dimensions shown in Figure 6. Thus, there is shown a schematic of a root end 616 which has an axial width *a* and a free end 618 which has an axial width *b*. The leaf element 612 has radial length *L* which can comprise a taper portion with length *Y* and a straight portion with length *X*. This is in contrast to Figures 4 and 5 in which the taper portion Y extended the full radial length of the leaf element 412, 512. The leaf taper angle, φ, can be defined in relation to the normal of the axis of rotation (or a radial line 636), as can the cover plate inner wall angle, ψ.

The taper of the leaf elements 612 advantageously removes material from the free end 618 of the leaf elements 612 which is not necessary for carrying the axial pressure drop. Further, it allows the root end 616 of the leaf elements 612 to be wider. The axial pressure load carrying capacity on the leaf seal is determined by the bending moment *M(z)* along the radial length of the leaf element. However, this reduces from the root to the tip following the quadratic relationship *M(z) =* ½ *(p_{d} - pᵤ) t (L -z)²* where *pᵤ* is the upstream pressure, *p_{d}* is the downstream pressure, *t* is the leaf thickness, *L* is the leaf length and *z* is the length of the leaf element from the root to the considered point. Hence, the bending moment decreases *M(z)* along the length of the leaf element from the root end. This means that, in a standard rectangular leaf element, the width at the free end is more than is necessary for carrying the bending moment due to axial pressure.

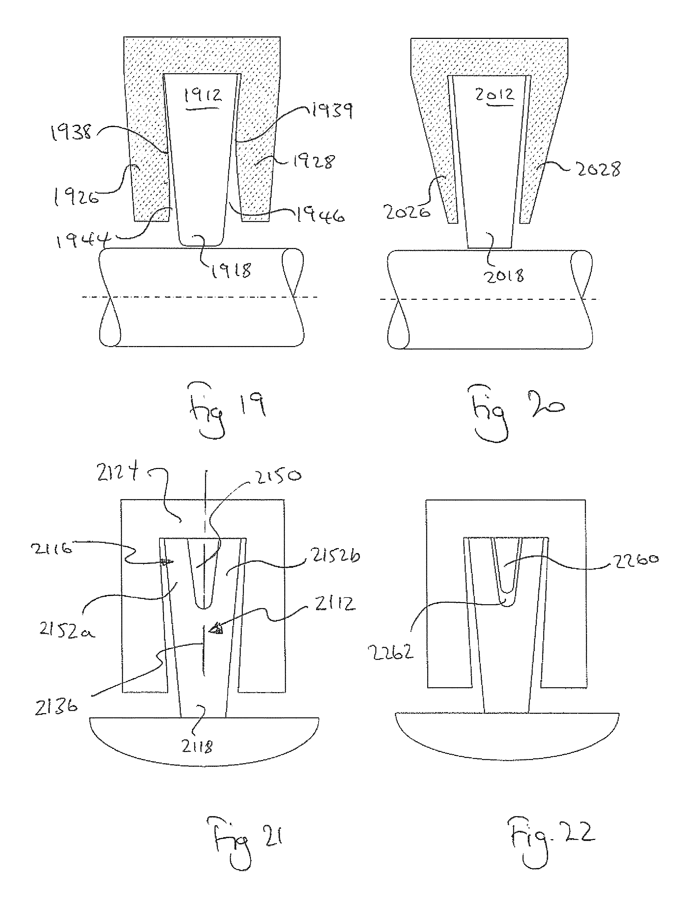

The provision of a tapered leaf element 612 accounts for the reduction in bending moment. However, the angle of the taper may be determined using other factors. For example, the taper angle φ may be optionally increased so as to have a root end 616 which is wider than in an equivalent non-tapered leaf element. This may provide additional strength to account for a narrower free end 618 and or additional girth for accommodating pressure equalising features as described below in connection with Figure 21 described below.

It will be appreciated that the ratio of *b* to *a* and angle of the taper of the leaf element 612 and inner walls 638, 639 of the cover plates will be application specific. In one advantageous embodiment, the ratio of *b* to *a* can be defined as *b* < *a*, or, more specifically, *b* < 0.5*a*. However, *b* is preferably between 0.5*a* and 0.1*a*. The taper angle φ of the leaf element may be in the range from 2 degrees to 45 degrees but is preferably between 5 degrees and 20 degrees. Where the cover plates have tapered inner walls 638, 639, the taper angle ψ may be comparable to the taper angle φ of the leaf edges and as such may be in the range from 2 degrees to 45 degrees but is preferably between 5 degrees and 20 degrees. However, it may be advantageous to provide a difference in the two angles φ, ψ. In this case, the angles φ, ψ may vary by as much as 10 degrees, but will preferably be within 5 degrees. The length Y over which the taper extends is also application specific but is generally greater than the radial extent of the cover plates 626, 628.

A typical length for the envisaged leaf elements of the invention are between approximately 20mm and 40mm. Here, *a* may be between approximately 4mm and 15mm, *b* may be between 1mm and 4mm. However, it will be appreciated that leaf elements having other dimensions may fall within the scope of the invention.

Generally, the inner walls of the cover plates in a leaf seal are provided in relation to the leaf elements to control airflow leakage through the seal and the resulting blow-down and lift-up forces on the leaf elements. Thus, in a conventional seal with rectangular leaf elements, the radial length of the cover plates and the separation from the leaf elements are determined to provide a desired level of blow-down or lift-up for a particular application.

There are two main contributors to blow-down: one is the pressure mismatch across the thickness of a leaf and the other is the flow momentum changes as the flow directions change on entering the leaf pack. These concepts are discussed in Franceschini, G., Jones, T. V., and Gillespie, D. R. H., Improved Understanding of Blow-Down in Filament Seals, Journal of Turbomachinery 132 (2010) 041004, TURBO-09-1028; and, Franceschini, G., Jones, T. V., and Gillespie, D. R. H., Improved Understanding of Blow-Down in Filament Seals, in ASME Turbo Expo 2008: Power for Land, Sea and Air, Berlin, Germany, 2008, ASME, GT2008-51197 which are incorporated by reference.

Having a tapered leaf in conjunction with tapering inner walls is particularly advantageous for controlling blow-down as it allows the separating gap between the inner walls of the cover plates and the respective edge of the leaf elements to be adjusted as the leaf element is radially deflected use. That is, as a leaf element is radially deflected it moves closer to the angled cover plate and the separating gap is reduced. The momentum change blow-down term will reduce as the fluid flow rate reduces and the pressure mismatch term reduces because more pressure is dropped in the tighter cover plate gaps and thus less pressure is dropped over the leaf. Thus the blow-down will reduce.

Straight and parallel leaf to cover plate gaps are necessary for rectangular leaf elements to allow them to deflect towards or away from the rotor when experiencing varying levels of blow-down and lift-up forces. However, having uniform, radially extending gaps means that the radial separation of the leaf elements and cover plates is always constant and it can be advantageous to adjust the gap to be able to vary the blow-down and lift-up behaviour of the leaf seal when deflections occur.

The narrowing of the gap G in the case of a tapered leaf element 610 and cover plate inner wall 638 is related to the local radial deflection of the leaf element 612 by the sine of the leaf taper angle ϕ as shown in Figure 7. The dashed line 620a represents an initial separating gap *G* which is between the cover plate inner wall 638 and upstream edge 620 of the leaf element 612 under a first set of operational parameters. Under a second set of operating conditions, the leaf element 612 is radially deflected by an amount *B* so as to provide a new separating gap *G* + Δ*G*. It can be seen that for blow-down causing a radial deflection of *B* will result in a Δ*G* = *Bsin(ϕ).*

The taper of the leaf elements shown in the previously described Figures have uniform tapers and with straight edged leaves. However, it will be appreciated that the taper angles and general edge profile shape may be advantageously adapted to provide a required load capacity or tuned response to radial deflection. Figures 8 to 12 provide some alternative configurations for leaf profiles.

Figure 8 shows a leaf element 812 having a quadratic width profile which approximately corresponds to the bending moment reduction along the radial length of the leaf element 812. Here the profile is described by *w* = *c1 z²* + *c2 z* + *c3* where *z* is the distance measured from the leaf element free end 818 in this instance. In the special case where *c2* = 0 it can be shown that *c3* = *b* and *c1* = *(a - b)* / *L²*, where L is the length of the leaf.

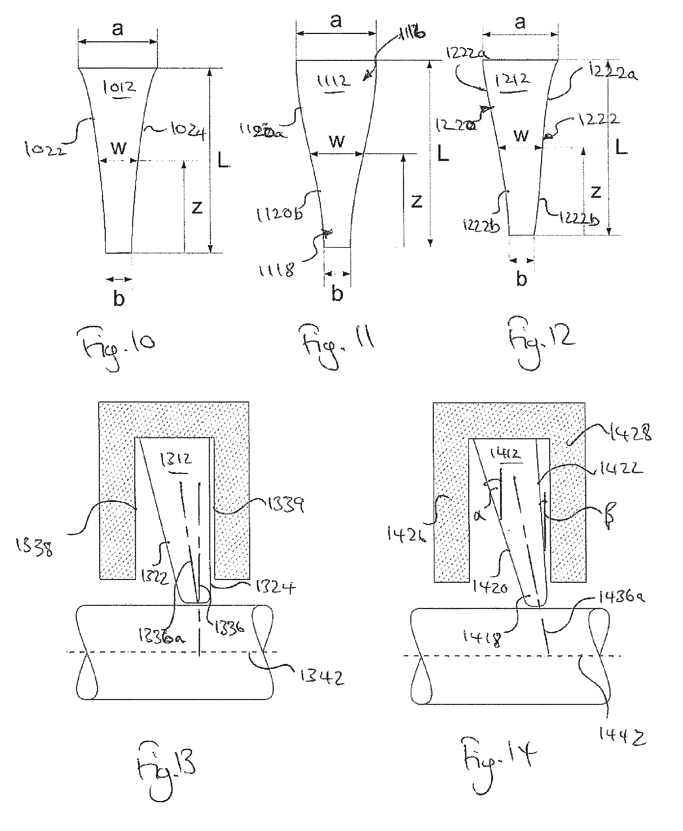

Figure 9 shows a generally convex leaf element 912 profile in which the upstream 920 and downstream edges 922 are convex along the radial length but not necessarily quadratic. Figure 10 shows a generally concave leaf element 1012 profile in which the upstream 1022 and downstream 1024 edges are concave along the radial length but not necessarily quadratic. Figure 11 shows a leaf element 1112 profile having concave1120a and convex 1120b portions in radial series. The convex portions are located towards the root end 1116 so as to be provide increased strength to the root end 1116 whilst having reduced width at the free end 1118.

The profiles shown in Figures 8 to 11 are generally symmetrical about the radially extending midline. The leaf element 1212 shown in Figure 12 has an asymmetric profile with convex and concave portions. Thus, the upstream edge 1220 of the leaf element 1212 is provided a concave portion 1220a at the root end 1216 in radial series with a convex portion 1220b at the free end 1218. The downstream edge 1222 includes a convex portion 1222a at the root end 1216 in radial series with a concave portion 1222b at the free end 1218.

As will be appreciated, as well as altering the profile of the leaf element to adjust the performance of the seal, it is also possible to modify the relationship between the leaf elements and the cover plates. This may include adjusting the relative axial spacing and the profile of the inner or outer wall of the cover plates.

Figure 13 shows a skewed asymmetric tapered leaf element 1312 in which the taper is provided within in the definition *b*<0.5*a*, however, the midline 1336a between the edges 1322, 1324 of the leaf element 1312 is skewed with respect to the radial line1336 of the rotor such that the downstream edge is normal to the rotational axis 1342 of the rotor and the upstream edge 1322 is inclined.

Both cover plate inner walls 1338, 1339 are perpendicular in the embodiment shown in Figure 13. Such an arrangement is invariant to radial deflection on the upstream and downstream sides. However, an angled upstream cover plate may be used to provide some variance in the separating gap and flow restriction if required.

It will be noted that the corners of the leaf element 1312 are softened or rounded to reduce any high stress points in the leaf. It will be appreciated that it may be advantageous to round the corners of the free end of the leaf elements in any of the described embodiments.

Figure 14 shows another skewed asymmetric tapered leaf element 1412 similar to that shown in Figure 13, but in which the inclination of the midline 1436a of the leaf 1412 is steeper for a similar aspect ratio of leaf 1412. This results in the upstream 1420 and downstream 1422 edges of the leaf 1412 being angled toward the upstream end of the seal, but at different angles so as to provide the required taper ratio. Thus, the upstream edge 1420 is at angle α to the normal of the rotational axis, and the downstream edge is at angle β, where β<α but inclined in a common direction, i.e. upstream. As with Figure 13, the cover plates 1426, 1428 are both set in the normal plane of the rotational axis 1442. This, in combination with the tapered leaf element 1412, provides separating gap which tapers towards the root end 1416 on the upstream edge 1422 and towards the free end 1418 on the downstream edge 1424.

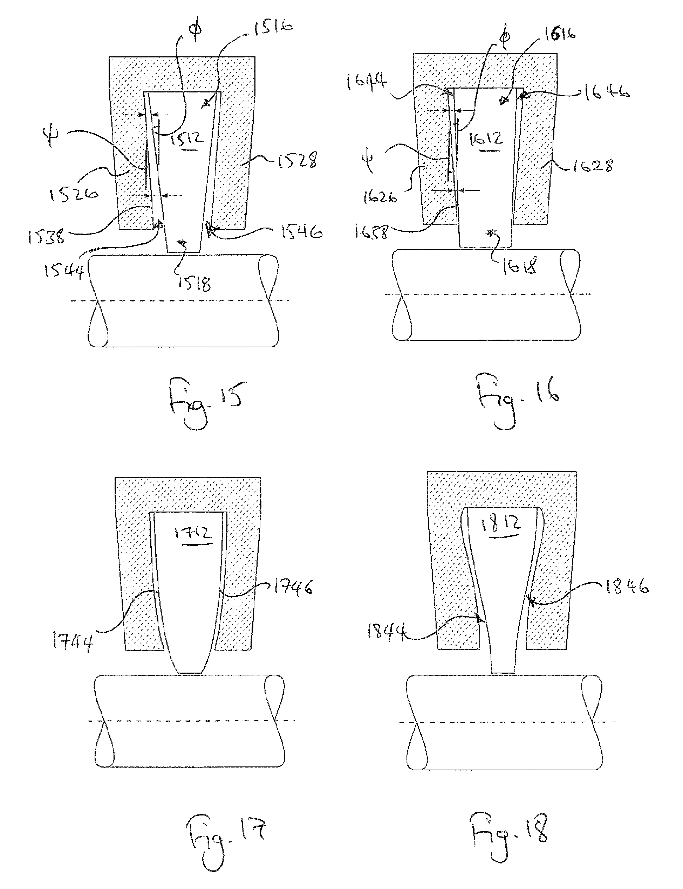

Figures 15 and 16 show alternative leaf elements 1512, 1612 and cover plates 1526, 1626, 1528, 1628 configurations in which the separating gaps 1544, 1644, 1546, 1646 are tapered in a radially outwards and a radially inwards direction respectively. Thus, Figure 15 shows a tapered leaf element 1512 having taper angle ϕ which is greater than the taper angle ψ of the cover plate inner wall 1538. Hence, the separating gap 1544 tapers from the free end 1518 toward the root end 1516 so as to be larger at the free end 1518 of the leaf element 1512. Figure 16 provides the opposite of this configuration in that the angle ψ is greater than the taper angle of the leaf element ϕ. Hence, the separating gap 1644 tapers from a wider gap at the root end 1616 towards a narrow gap at the free end 1618.

Figure 17 shows a concave leaf element 1712 similar to that shown in Figure 9 with corresponding cover plates. The gaps 1744, 1746 which separate the upstream and downstream edges of the leaf element 1712 are substantially constant along the length of the cover plates.

Figure 18 shows a convex-concave leaf element 1812 with convex-concave cover plates 1826, 1828 but which provide a varying gap between the corresponding edges of leaf element and cover plate.

Figure 19 shows a leaf element 1912 having asymmetric cover plates 1926, 1928 which provide varying separating gaps 1944, 1946 on the upstream and downstream side of the leaf elements 1912. Thus, there is provided a leaf element 1912 which has a symmetrical tapering profile with straight edges and cover plates 1926, 1928 with convex inner walls 1938, 1939. The curvature of the upstream inner wall 1938 is less than the downstream inner wall 1939 such that the maximum separation between the upstream inner wall 1938 and leaf element 1912 is less than the maximum downstream separation. The maximum separation is provided towards the free end 1918 of the leaf elements 1912 in both instances such that the choking of the separating gap is provided towards the root end portion when there is radial deflection.

Figure 20 shows a leaf seal 2012 with tapering cover plates 2026, 2028 such that the axially extending width is broader towards the root end 2016 of the cover plates 2026, 2028, and narrower towards the free end 2018. The seal is symmetrical in the shown embodiment, however, it will be appreciated that tapering cover plates may be provided on any of the described embodiments where suitable.

Figure 21 shows a leaf seal 2112 having a pressure equalisation feature in the form of an aperture 2150. As described above, the leaf elements 2112 are arranged so that the free ends 2118 may be in close proximity or in direct contact when in use. Hence, the relative porosity at the sealing surface of the leaf elements 2112 is generally lower when compared to the root end 2116. As the root end 2116 is not performing much of a sealing function, it is beneficial to include some features which allow a circumferential flow through the leaf elements, thereby providing some pressure equalisation across them. This can be advantageous for reducing blow-down and other flow-induced forces. Thus, as can be seen in Figure 21, the root end 2116 of the leaf elements 2112 can include an aperture 2150 in the form of an elongated slot which extends radially inwards from the root end 2116 of the leaf 2112 along the radially extending midline 2136 of the leaf 2112. The slot 2150 extends approximately two fifths of the way along the length of the leaf element 2112 and is generally triangular or V-shaped with a blunted or rounded apex. However, the radial length of the aperture could be in the range bounded by approximately three fifths the length of the leaf element to one fifth. The angle of the V is similar to the taper such that the slot defines two arms 2152a,b which extend from a mid-portion of the leaf element 2112 to the backing plate 2124 and have a uniform width. In use, the aperture 2150 provides an airflow path which helps with pressure equalisation on either circumferential side of the leaf element 2112. This can help to reduce blow-down.

Figure 22 shows a modification of the seal shown in Figure 21, in that an axial flow restrictor or solid barrier 2260 in the form of a rib is provided within the slot 2262. The rib extends radially inwards towards the shaft so as to be centrally arranged within the slot and provide a more tortuous path for the leakage air. In the arrangement shown in Figure 22 the rib can be thought of as a blunted labyrinth tooth which has a cross section which broadly corresponds to the aperture 2262 through which it passes such that there is a substantially uniform separating gap along the flanks of the rib with a larger gap towards the free-end end. The larger gap towards the free end provides some clearance for radial deflection and also some pressure equalisation across the leaf. Other formations of rib and aperture are possible however in most applications the solid barrier2260 will have radial clearance that exceeds the radial movement of the seal to facilitate radial compliance of the seal. Further, the rib may be axially offset within the aperture to provide an asymmetrical arrangement in which a larger aperture is provided on one side for the purpose of pressure equalisation. Further, an axially offset rib may provide a biased lift-up or blow-down response which may be advantageous for certain applications.

It will be appreciated that, in the case where each leaf has a pressure equalising aperture, the rib may be provided by an annular rib which extends from and optionally integrally formed with the backing plate.

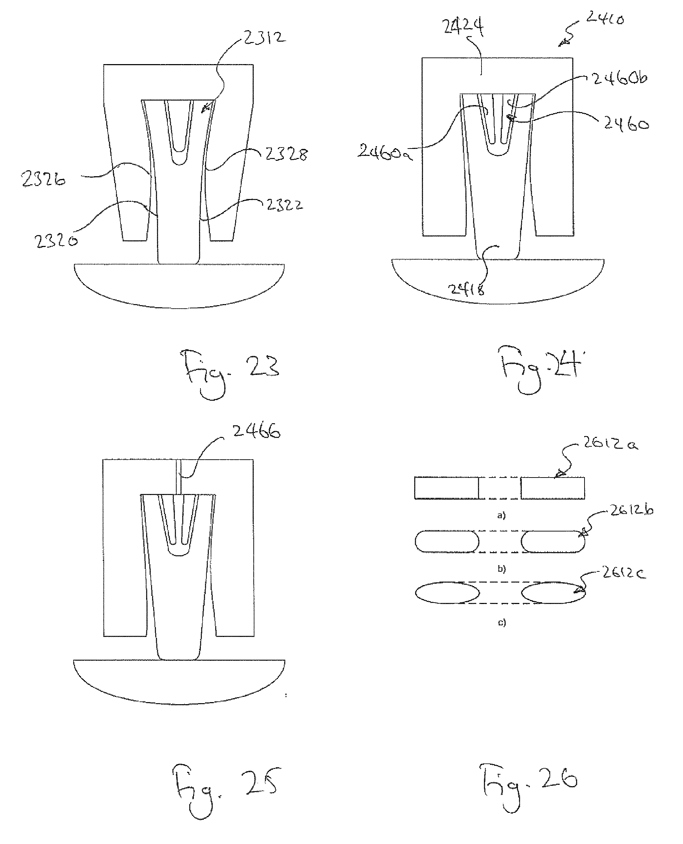

The variants of the leaf element shape and corresponding cover plate arrangements described above may be used in conjunction with the pressure equalising apertures described in connection with Figure 21, and the axial pressure restriction described in Figure 22. Thus, as an example of this, Figure 23 shows a symmetrical leaf element 2312 having concave upstream 2320 and downstream 2322 edges and cover plates 2326, 2328 having convex inner walls. The inner walls have a greater curvature than the leaf element edges and so the separation increases along the radial length of the leaf element to provide a continuously increasing separation gap.

Figure 24 provides a variant of the seal shown in Figure 19. Here, the seal 2410 includes a axial flow restrictor 2460 in the form of a pair of ribs 2460a,b which extend from the backing plate 2424 radially inwards toward the free end 2418. The ribs 2460a,b are arranged symmetrically about a radial mid-line of the leaf element 2412 and separated by a gap which is approximately equal to the average width of the ribs which are tapered in the cross-section. Providing a two part axial restriction creates a turbulent flow within the aperture which acts to disrupt and reduce the axial leakage across the seal.

Figure 25 shows a modified version of the arrangement shown in Figure 24, in which the two part axial flow restrictor 2460a,b includes an inlet 2466 for receiving an auxiliary supply of air. In use, an intermediate pressure feed air source is provided in fluid communication with the cavity such that air is injected to the cavity between the axially separated ribs. The pressure feed could be connected to upstream side of the seal or could be connected to an independent pressure zone or a sealed reservoir which acts as an integrator in the system. It will be appreciated that such an injection system may be preferentially used with others of the described embodiments where appropriate.

Figure 26 shows a plurality of cross sections 2612a,b,c taken from different leaf elements. Each of the leaf elements 2612a,b,c demonstrate different levels of rounding on the edges of the leaf elements 2612a,b,c at the root end 2616. Thus, there is a square cross section shown in a), a bull nosed or race track cross-section having edges with a constant radius of curvature in b), and an elliptical cross section in c). Other round cross sections are envisaged within the scope of the invention.

Variations to the described embodiments are envisaged within the scope of the invention. For example, the leaf elements may be circumferentially thicker at the root end than at the tip end so that there is a taper in thickness as well as a taper in width. The taper may also be such that the leaf tip is marginally thicker than further up the leaf element towards the leaf root. The thickness profile may be linear or engineered to a desired profile in order to achieve a suitable blow-down response. It will be appreciated that where the seal is fixed to the rotor or radially inner component, the free ends of the leaf elements are located at the larger diameter then the thickness should be larger at the free end than at the root end.

It will be appreciated, that the various features described above in the different embodiments may be implemented independently of other features where possible, and various features may be combined in some advantageous embodiments, even where not explicitly described.

## Claims

1. A leaf seal for sealing between a static component and a relatively rotating component having an axis of rotation, the leaf seal defining axially separated higher pressure upstream and lower pressure downstream areas when in use, the leaf seal comprising:
a plurality of leaf elements having:
a root end for attachment to the static component;
a free end for wiping contact with the rotating component;
an upstream edge extending from the root end to the free end; and,
a downstream edge extending from the root end to the free end,
wherein the leaf element width between the upstream edge and downstream edge at the root end is *a*, and width between the upstream edge and the downstream edge at the free end is *b*, where *b*<0.5*a*.

2. A leaf seal as claimed in claim 1, wherein the taper angle of either or both of the upstream edge and downstream edge of at least one leaf element relative to the normal of the rotational axis is between 2 and 45 degrees.

3. A leaf seal for sealing between a static component and a relatively rotating component having an axis of rotation, the leaf seal defining axially separated higher pressure upstream and lower pressure downstream areas within when in use, the leaf seal comprising:
a plurality of leaf elements having:
a root end for attachment to the static component;
a free end for wiping contact with the rotating component;
an upstream edge extending from the root end to the free end; and,
a downstream edge extending from the root end to the free end,
wherein the leaf element is tapered towards the free end, the taper angle of the upstream edge and downstream edge to the normal of the rotational axis are both between 2 and 45 degrees in a non-working state.

4. A leaf seal as claimed in claim 3, wherein the minimum taper angle is 5 degrees relative to the normal of the rotational axis.

5. A leaf seal as claimed in any preceding claim, wherein either or both of the leaf element upstream and downstream edges includes either or both of a convex portion and a concave portion.

6. A leaf seal as claimed in any preceding claim, further comprising an upstream and a downstream cover plate, each having an inner wall which faces the leaf element, wherein the angle of either or both of the upstream inner wall and downstream inner wall relative to the normal of the rotational axis is between 2 and 45 degrees.

7. A leaf seal as claimed in claim 6, further comprising an upstream and a downstream cover plate, each having an inner wall which faces the leaf element, wherein the difference in the angle of one or other of the upstream and downstream inner walls and the corresponding edge of the leaf element is less than 10 degrees relative to the normal of the rotational axis.

8. A leaf seal as claimed in any of claims 1 or 5, further comprising an upstream and a downstream cover plate, each having an inner wall which faces the leaf element, wherein either or both of the upstream or downstream cover plate inner walls includes either or both of a convex portion and a concave portion.

9. A leaf seal as claimed in either of claims 6 or 8, wherein at least one of the upstream or downstream leaf element edges are separated from a corresponding portion of the adjacent inner wall by a gap, and the gap is substantially constant along the radial length of the inner wall.

10. A leaf seal as claimed in any preceding claim, wherein at least one leaf element is asymmetric about a radially extending mid-line.

11. A leaf seal as claimed in any of claims 5 to 10 wherein the arrangement of the upstream and downstream cover plate inner walls are asymmetric about a radially extending mid-line.

12. A leaf seal as claimed in any of claims 5 to 11, wherein the cover plates have axial thickness, and either or both of the upstream and downstream cover plates are tapered so as to have a thicker cross section at the root end.

13. A leaf seal as claimed in any preceding claim, wherein at least one leaf element includes an aperture for pressure equalisation across the circumferential thickness of the leaf element.

14. A leaf seal as claimed in claim 13, wherein the aperture is triangular or V shaped.

15. A leaf seal as claimed in any preceding claim, wherein the leaf element includes at least one labyrinth tooth.

16. A leaf seal as claimed in any preceding claim, further comprising a cavity which is in fluid connection with a pressure source which is external to the seal.

17. A leaf seal as claimed in any preceding claim, wherein any edge of the leaf seal is rounded in a cross section defined by a circumferential plane.
